# EUROPÄISCHE PATENTSCHRIFT

(11) **EP 0 632 888 B1**
(45) Veröffentlichungstag und Bekanntmachung des Hinweises auf die Patenterteilung: **10.12.1997**
(21) Anmeldenummer: 93902060.8
(22) Anmeldetag: 28.01.1993
(51) Int. Cl.: G01N 21/88, B07C 5/342, B07C 5/36

(54) **VERFAHREN ZUM ÜBERPRÜFEN DER OBERFLÄCHE EINER MEHRZAHL KLEINER GEGENSTÄNDE, UND VORRICHTUNG ZUR DURCHFÜHRUNG DES VERFAHRENS**
PROCESS AND DEVICE FOR INSPECTING THE SURFACE OF A PLURALITY OF SMALL OBJECTS
PROCEDE POUR LE CONTROLE DE LA SURFACE DE PLUSIEURS PETITS OBJETS ET DISPOSITIF POUR L'APPLICATION DE CE PROCEDE

(43) Veröffentlichungstag der Anmeldung: 11.01.1995
(73) Patentinhaber: Seidenader Maschinenbau GmbH, 85551 Kirchheim (DE)
(72) Erfinder: Seidenader Maschinenbau GmbH, 85551 Kirchheim (DE)
(74) Vertreter: Laufhütte, Dieter, Dr.-Ing.
(86) Internationale Anmeldenummer: DE9300071
(87) Internationale Veröffentlichungsnummer: WO9417395

(56) Entgegenhaltungen:
- EP-A- 0 172 663
- GB-A- 2 016 683
- US-A- 4 082 188

## Beschreibung

Die Erfindung betrifft ein Verfahren zum Überprüfen der Oberfläche und deren Formgebung einer Mehrzahl kleiner Gegenstände von im wesentlichen übereinstimmender Gestalt, wobei die Prüfung vorgenommen wird, während die Gegenstände mit einer drehbaren Scheibe unter einer Prüfvorrichtung hindurchbewegt werden. Ferner betrifft die Erfindung eine Vorrichtung zur Durchführung des Verfahrens.

Aus einem Bericht der Kanebo Engineering Co. Ltd., mit dem Titel "Medical Tablets Video Inspecting System, MODEL TVIS-3 ist bereits bekannt, zur Prüfung der Oberfläche von Tabletten einen transparenten Drehtisch zu verwenden und die Oberseite, die Unterseite sowie die Seitenflächen von links und rechts mit Hilfe einer TV-Kamera abzutasten, um eventuell vorhandene Defekte visuell zu erfassen. Solche gläsernen Drehteller sind jedoch bezüglich ihrer Anschaffungs- und Wartungskosten sehr teuer und hinsichtlich ihrer Verschmutzung und Beschädigung, zum Beispiel durch Kratzer auf ihrer Oberfläche, die während ihrer Verwendung entstehen, sehr kritisch, da gerade hierdurch fehlerhafte Ergebnisse bei der Inspektion der Tabletten verursacht werden. Auch ist die Position der Prüflinge bei einer Glasplatte mit glatter Oberfläche nicht genau definiert, wodurch ebenfalls ungenaue Prüfergebnisse bedingt sind.

Von einer automatischen Qualitätskontrolle wird aber gefordert, daß bei hohen Durchlaufquoten der Prüflinge, z.B. 4000 Stück pro Minute, die Prüflinge unbeschädigt das Kontrollsystem durchlaufen und die Kontrolle nicht mit systembedingten Fehlern behaftet ist.

Die der Erfindung zugrunde liegende Aufgabe besteht nun darin, ein Verfahren anzugeben, das es erlaubt, kleine Gegenstände unterschiedlichster Beschaffenheit und Form zu inspizieren, ohne daß diese Gegenstände während ihres Transportes durch die Prüfvorrichtung beschädigt werden und auch ohne daß die Prüfvorrichtung selbst im Laufe ihres Einsatzes verschmutzt oder Veränderungen durch Abrieb und dergleichen erleidet, durch die Fehler in die Prüfergebnisse gelangen könnten.

Nach der Erfindung wird diese Aufgabe dadurch gelöst, daß das bekannte Verfahren, bei dem die Oberseite einer Mehrzahl kleiner Gegenstände geprüft wird, während diese mit einer drehbaren Scheibe unter einer Prüfvorrichtung hindurchbewegt werden, dahingehend verbessert wird, daß die Gegenstände nach Beendigung der Prüfung ihrer Oberseite von der Oberfläche der drehbaren Scheibe (Verteilerscheibe) an die Unterseite einer weiteren drehbaren Scheibe (Übernahmescheibe) übergeben und dort während der Prüfung ihrer Unterseite festgehalten und nach Beendigung ihrer Prüfung von der Übernahnesscheibe entfernt und entsprechend dem Prüfergebnis sortiert werden.

Durch die Übertragung der Gegenstände von der Verteilerscheibe an eine weitere drehbare Scheibe, nachdem ihre Oberseite in an sich bekannter Weise geprüft worden ist, wobei die Übertragung so erfolgt, daß die Gegenstände mit ihrer bereits inspizierten Oberseite an dieser sogenannten übernahmescheibe anliegen, wird ihre zunächst der Prüfung entzogene Unterseite und/oder Seitenflächen für die jeweiligen Inspektionen freigegeben.

Bei einem solchen Verfahrensablauf wird die Verwendung transparenter Drehteller vermieden und damit werden auch die Probleme ausgeschaltet, die, durch die Materialeigenschaften dieser Drehteller bedingt, die Prüfergebnisse verunsichern.

Für das erfindungsgemäße Verfahren eignen sich in erster Linie relativ kleine Gegenstände, die beispielsweise als Schüttgut angeliefert werden können. Diese Gegenstände können entweder kugel- oder eiförmig sein, das heißt, sie weisen keine ausgeprägten Seitenflächen auf. Sie können aber auch zylindrische Körper beliebiger Grundfläche sein, oder die Form von Prismen aufweisen.

Handelt es sich bei den zu prüfenden Gegenständen um solche mit ausgeprägten Seitenflächen, werden diese Seitenflächen vorzusweise vor der Übernahme der Gegenstände durch die übernahmescheibe geprüft. Dabei ist es von Vorteil, wenn die Gegenstände hierzu über die Oberfläche der Verteilerscheibe auf der ihre Oberseite bereits inspiziert wurde, angehoben werden. Die Seitenflächen der Gegenstände können aber auch nach erfolgter Übernahme der Gegenstände durch die Übernahmescheibe, noch an dieser hängend inspiziert werden.

Gemäß einer vorzugsweisen Ausbildung des Verfahrens erfolgt der Übergang der Gegenstände von der Verteilerscheibe auf die übernahmescheibe mit Hilfe von Unterdruck und oder Preßluft. Bei magnetisierbaren Materialien kann dieser Übergang auch mit Hilfe eines Magneten erfolgen. Eine mechanische Übertragung, die ebenfalls möglich ist, wird bevorzugt bei Gegenständen aus einem weniger empfindlichen Material angewendet. Entsprechende Maßnahmen werden, wie nachstehend noch näher erläutert, auch vorzugsweise bei der Entfernung der für schlecht befundenen Gegenstände von der Übernahmescheibe angewendet, wenn deren Prüfung abgeschlossen ist.

Um die Bahn der zu prüfenden Gegenstände festzulegen und Beobachtungsfehler durch Abweichungen von dieser Bahn zu vermeiden, werden nach einem weiteren vorzugsweisen Verfahren die Gegenstände vor Beginn der Prüfung, also bereits vor der Prüfung ihrer Oberseite in bestimmte auf der Oberfläche der Verteilerscheibe vorgesehene Prüfpositionen gebracht.

Das Prüfverfahren und die Prüfvorrichtung gemäß der Erfindung ergiben sich aus den Merkmalen der Ansprüche 1, 8.

Um die Durchlaufrate der zu prüfenden Gegenstände zu erhöhen, kann man vorzugsweise zwei Verteilerscheiben in Verbindung mit einer Übernahmescheibe verwenden. Ferner ist es von Vorteil, wenn die Prüfpositionen für die Gegenstände in Form von Ausnehmungen auf Verteiler- und Übernahmescheiben in konzentrischen Reihen angeordnet sind. Durch entsprechende Wahl der Drehgeschwindigkeiten von Verteiler- und Übernahmescheibe läßt sich ermöglichen, daß die Ausnehmungen von Verteilerund Übernahmescheibe im Überlappungsbereich der Scheiben miteinander fluchten, sodaß ein Übergang der Gegenstände von Scheibe zu Scheibe problemlos erfolgen kann.

Zur Erleichterung der Übertragung der Gegenstände von der Verteilerscheibe zur Übernahmescheibe ist gemäß einer vorzugsweisen Ausbildung der Vorrichtung in der Ausnehnung der Verteilerscheibe ein auf- und abbewegbarer Stößel angeordnet, der als Auflage für den Prüfling dient und die Aufgabe hat, den Prüfling, zum Beispiel zur Prüfung seiner Seitenflächen oder zur Einleitung des überganges an die Übernahmescheibe, anzuheben und im letzteren Fall ihn in den Zwischenbereich(Spalt) zwischen Verteiler- und Übernahmescheibe zu bringen. Vorzugsweise ist zur Anhebung des Stößels an den entsprechenden Stellen unter der Verteilerscheibe eine Auflaufschiene für den Stößelfuß angeordnet, durch die der Stößel bei Drehung der Verteilerscheibe automatisch angehoben wird.

Im Übergabebereich der übernahmescheibe ist vorzugsweise eine Unterdruckkammer vorgesehen, so daß der angehobene Prüfling an die Übernahmescheibe gesaugt und an dieser so lange festgehalten werden kann, bis die Kontrolle seiner Unterseite und gegebenenfalls seiner Seitenflächen beendet ist und der für schlecht befundene Prüfling aussortiert werden kann, während die guten Prüflinge von selbst abfallen und aufgefangen werden, nachdem sie den Bereich der Vorrichtungen verlassen haben, die dazu dienen, die Prüflinge an der Unterseite der Übernahmescheibe festzuhalten.

Weitere Einzelheiten der erfindungsgemäßen Vorrichtung ergeben sich aus den Merkmalen des Hauptanspruches für die Vorrichtung in entsprechender Kombination mit den Merkmalen der hierauf zurückbezogenen Unteransprüche.

Weitere Einzelheiten vorzugsweiser Ausbildungen der erfindungsgemäßen Vorrichtung ergeben sich ferner aus der nachstehenden Beschreibung von Ausbildungsbeispielen anhand der Zeichnung.

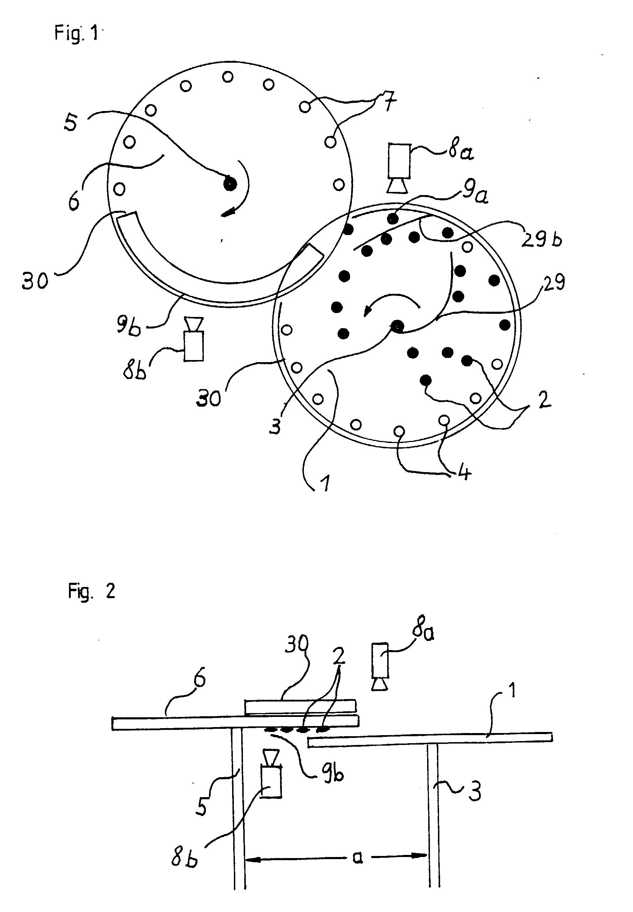

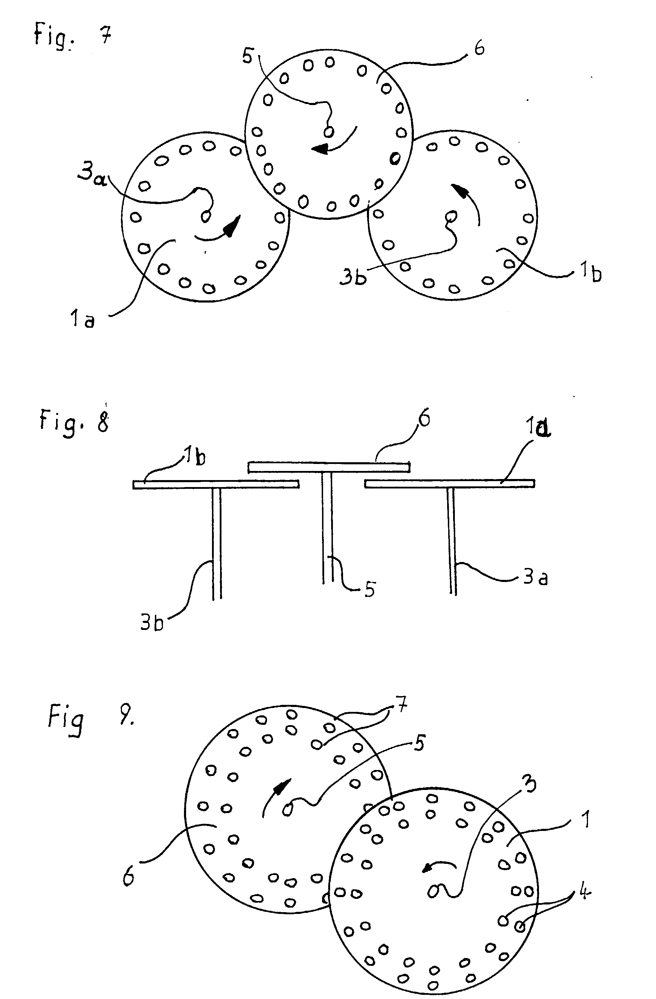

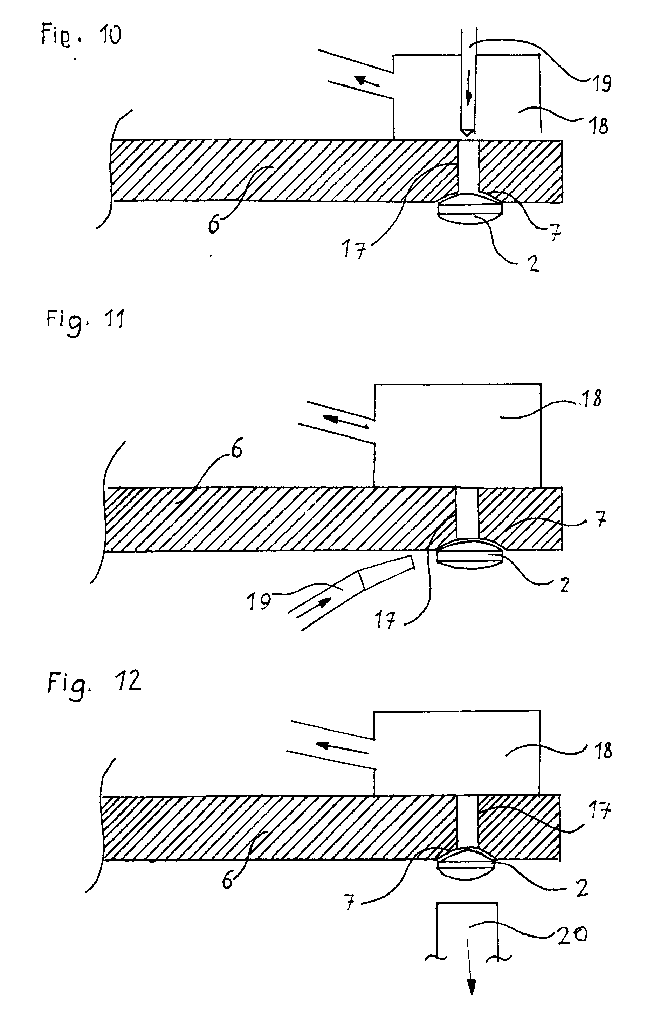

Hierin zeigen:
Fig.1
   eine Verteilerscheibe und eine Übernahmescheibe in Draufsicht mit aufgebrachtem Schüttgut und teilweise bereits positionierten Prüflingen,
Fig. 2
   eine Seitenansicht der in Fig. 1 gezeigten Verteiler- und Übernahmescheiben,
Fig. 3
   eine vergrößerte Darstellung eines abgebrochenen Querschnittes der Verteilerscheibe mit einem in Prüfposition seiner Oberseite befindlichen Prüfling und einer Prüfvorrichtung,
Fig. 4
   eine vergrößerte Darstellung eines abgebrochenen Querschnittes der Verteilerscheibe mit einem Prüfling, dessen Seitenflächen vor der übergabe an die Übernahmescheibe inspeziert wird,
Fig. 5
   eine vergrößerte abgebrochene Querschnittsdarstellung einer Verteiler- und Übernahmescheibe in einer Übergabephase eines Prüflings von der Verteiler- an die Übernahmescheibe,
Fig. 6
   eine vergrößerte abgebrochene Querschnittsdarstellung einer Verteiler- und Übernahmescheibe, in der eine weitere Möglichkeit des überganges eines Prüflings von der Verteilerscheibe an die Übergabescheibe ohne Inspektion der Seitenflächen gezeigt ist,
Fig. 7
   eine Draufsicht auf eine Kombination von zwei Verteilerscheiben mit einer Übernahmescheibe,
Fig. 8
   eine Seitenansicht der nach Fig. 7 angeordneten Scheiben,
Fig. 9
   eine Verteiler- und eine Übernahmescheibe mit jeweils zwei Reihen von Positionslöchern für die Prüflinge,
Fig. 10
   eine abgebrochene Querschnittsdarstellung der Übernahmescheibe mit einer Preßluftvorrichtung zum Entfernen des Prüflings beim Abschluß der Kontrolle,
Fig. 11
   eine Darstellung der Übernahmescheibe nach Fig. 10 mit einer weiteren Preßluftvorichtung zum Entfernen des Prüflings,
Fig. 12
   eine Darstellung der Übernahmescheibe nach Fig.10 mit einer Unterdruckvorrichtung zum Entfernen des Prüfligs aus seiner Prüfposition,
Fig. 13
   eine Darstellung der Übernahmescheibe nach Fig.10 mit einem Elektromagnet zum Entfernen des Prüflings aus seiner Prüfposition,
Fig. 14
   eine Darstellung einer Übernahmescheibe nach Fig.10 mit einem weiteren Elektromagneten zum Entfernen des Prüflings aus seiner Prüfposition,
Fig. 15
   eine Darstellung einer Übernahmescheibe nach Fig.10 mit einem Zahnrad zur Entfernung eines Prüflings aus der Prüfposition in der Übernahmescheibe,
Fig. 16
   eine Darstellung einer Übernahmescheibe mit einer Schwingfedervorrichtung zur Entfernung der für schlecht befundenen Prüflinge,
Fig. 17
   a,b,c, Querschnittsdarstellungen von drei unterschiedlichen Ausbildungen des Stößelschaftes,
Fig. 18
   eine Seitenansicht einer weiteren Ausbildung eines Stößelschaftes.

Sich entsprechende Teile sind in den Figuren mit übereinstimmenden Bezugszeichen gekennzeichnet.

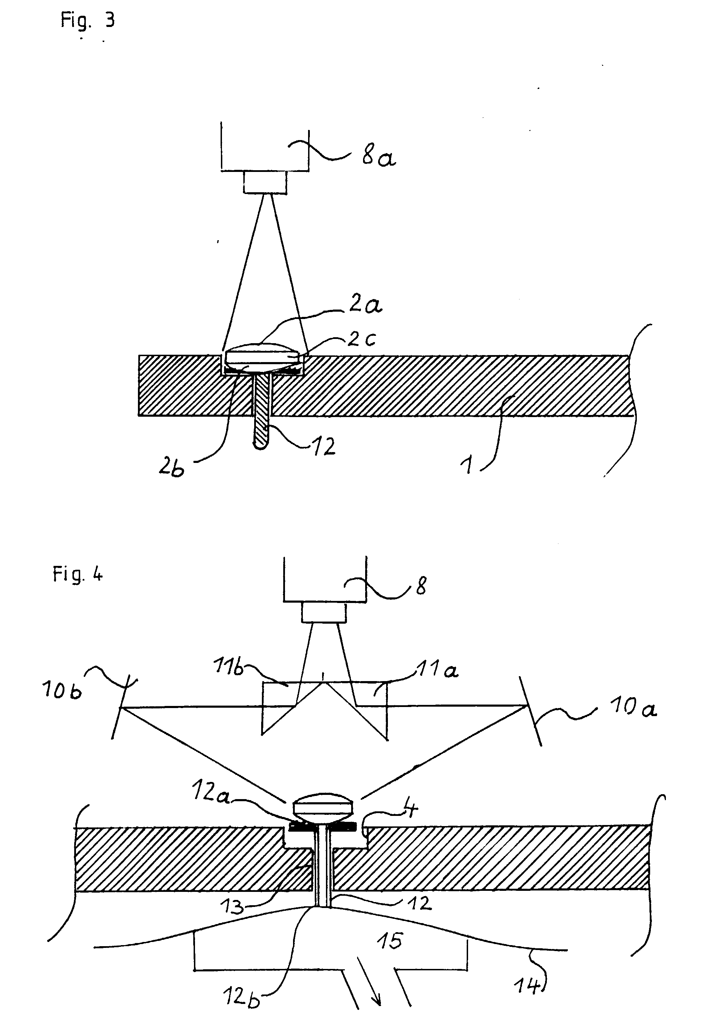

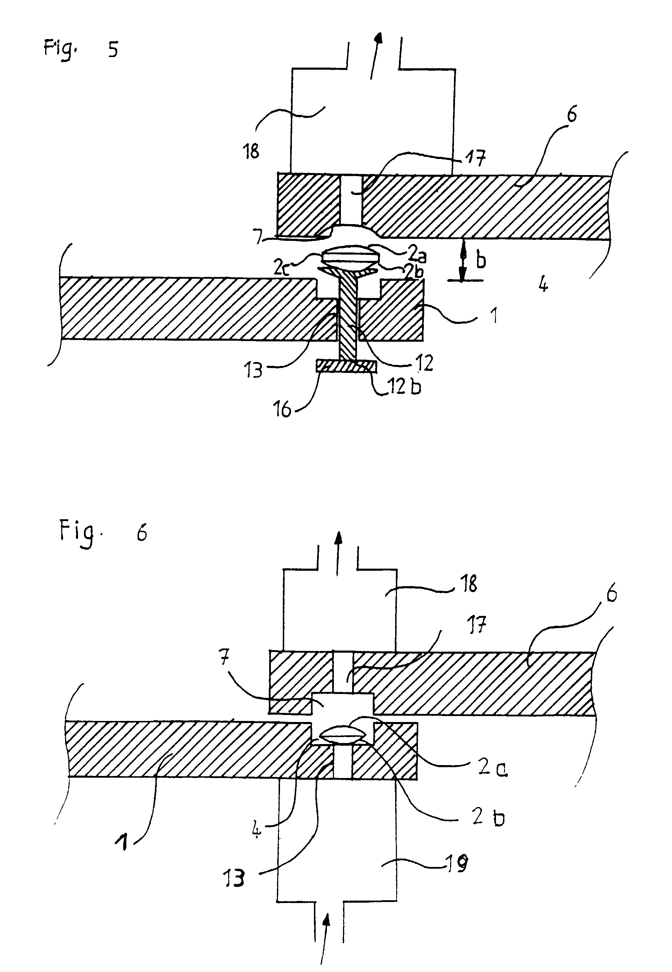

Einer Drehscheibe 1 mit horizontalem Drehteller werden die kleinen Gegenstände 2 (Prüflinge) als Schüttgut zugeführt, um die Oberfläche der Gegenstände zu kontrollieren. Die Form der Prüflinge 2 kann vielgestaltig sein. In den dargestellten Beispielen handelt es sich um Prüflinge in Tablettenform, deren Oberseite 2a und deren Unterseite 2b konvex gewölbt sind. Oberseite 2a und Unterseite 2b sind, wie in Fig.3 gezeigt, über eine ringförmige Seitenfläche 2c miteinander verbunden. Es kann aber auch, wie in Fig.6 dargestellt ist, die konvexe Oberseite 2a unmittelbar an die konvexe Unterseite 2b ohne Seitenfläche angrenzen. Infolge der bei der Drehung der Drehscheibe 1 um ihre Drehachse 3, im Beispiel gegen den Uhrzeigersinn, auf die Prüflinge 2 wirkenden Zentrifugalkraft gelangen Prüflinge 2 gegebenenfalls unter Mitwirkung eines Führungsbleches 29, in den Umfangsbereich der Drehscheibe 1 und fallen in Ausnehmungen 4, die in Abständen längs des Scheibenrandes in der Oberseite der Drehscheibe 1 vorgesehen sind, das heißt, die Drehscheibe 1 verteilt und positioniert das ihr zugeführte Schüttgut und dient somit als Verteilerscheibe, wie sie im nachstehenden auch bezeichnet wird. Ein Randblech 30 verhindert ein Herunterfallen der Prüflinge 2. Ferner ist ein Abweiseblech 29b vorgesehen, das die Aufgabe hat, überschüssige Prüflinge, für die keine Ausnehmung 4 vorgesehen ist, um die Inspektionsstelle 9a herum zu lenken. Um die Durchsatzmenge an Prüflingen pro Zeiteinheit zu erhöhen, kann man, wie dies in Fig.8 gezeichnet, auch zwei oder mehrere konzentrische Reihen von Ausnehmungen 4 auf der Verteilerscheibe 1 vorsehen. Die Abmessungen der Ausnehmungen 4 entsprechen im wesentlichen denen der Prüflinge 2.

In einem Abstand "a" von der Drehachse 3 der Verteilerscheibe 1 ist die Drehachse 5 einer zweiten Drehscheibe 6 angeordnet. Die Ebene des Drehtellers der Drehscheibe 6 verläuft ebenfalls horizontal und liegt geringfügig über derjenigen der Verteilerscheibe 1. Der Durchmesser der Drehscheibe 6 entspricht im Beispiel dem Durchmesser der Verteilerscheibe 1, der Abstand a ist so gewählt, daß sich die Umfangsbereiche der beiden Drehscheiben 1 und 6 zumindest soweit überlappen, daß bei entsprechender Wahl der Drehgeschwindigkeiten der Scheiben Ausnehmungen 4 der Verteilerscheibe 1 mit Ausnehmungen 7, die wie bei der Verteilerscheibe 1 in geringem Abstand vom Scheibenrand aber in der Unterseite der Scheibe 6 angebracht sind, in Deckung kommen, also mit diesen fluchten. Siehe hierzu Fig. 1, 5 und 6.

Eine Kamera 8a ist über der Verteilerscheibe 1 an einer Kontrollstelle 9a angeordnet, an der die Oberseite 2a der Prüflinge 2 überprüft wird, bevor diese infolge der Scheibendrehung in den Überlappungsbereich der beiden Drehscheiben 1 und 6 gelangen.

An der Kontrollstelle 9a sind, wie aus Fig. 4 zu erkennen, beidseitig des Prüflings 2 Umlenkspiegel 10a, b, angeordnet, die das Bild der Seitenflächen 2c des Prüflings 2 reflektieren und über Umlenkprismen 11a,b zu Kamera 8a lenken.

Zur Inspektion der Seitenflächen 2c eines Prüflings ist es zweckdienlich, den Prüfling etwas über die Oberfläche der Verteilerfläche 1 anzuheben. Hierzu sind Stößel 12 vorgesehen, die in einer mittig angebrachten Bohrung 13 jeder Ausnehmung 4 auf- und abbewegbar sind. Der Stößel 12 ist in Form einer Hülse ausgebildet und dient mit seiner dem Prüfling angepaßten, in der Ausnehmung 4 liegenden Stirnfläche 12a als Auflagefläche für den Prüfling 2. Der Stößelfuß 12b ragt durch die Bohrung 13 nach unten über die Unterseite der Scheibe 1 hinaus und läuft im Bereich der Kontrollstelle 9a infolge der Scheibendrehung auf eine unter der Verteilerscheibe 1 angeordnete Hebeschiene 14 auf. Hierdurch wird der Stößel 12 mit dem Prüfling 2 soweit angehoben, daß die Seitenflächen 2c des Prüflings für die Prüfung frei zugänglich sind. Um allerdings bei den Prüflingen 2 zu verhindern, daß diese infolge der bei der Drehung der Scheibe 1 auf die Prüflinge 2 wirkenden Zentrifugalkraft von der Auflagefläche 12a des Stößels 12 herunterfallen, steht die Hebeschiene 14 in Verbindung mit einer Unterdruckkammer 15. Der Sog aus der Unterdruckkammer 15 wirkt durch den hülsenförmigen Stößel 12 auf den Prüfling 2 und hält ihn während der Kontrolle auf der Stirnfläche 12a des Stößels 12 fest.

Nach Fig.5 befindet sich eine weitere Hebeschiene 16 unter der Verteilerscheibe 1, und zwar in deren überlappungsbereich mit der Drehscheibe 6. Hier bewirkt die Hebeschiene 16 ein Anheben des Stößels 12 mit dem Prüfling 2 in den Spalt b, der sich durch den Höhenabstand der Drehteller der Drehscheiben 1 und 6 ergibt. Dieser Höhenabstand b ergibt sich aus der jeweiligen Dicke der Prüflinge 2.

Darüber hinaus hat der Stößel 12 hier die Aufgabe, den Prüfling 2 in den Bereich der mit der Ausnehmung 4 der Verteilerscheibe 1 fluchtenden Ausnehmung 7 der Drehscheibe 6 anzuheben. Eine in der Ausnehmung 7 vorgesehene, durch die Drehscheibe 6 hindurchgehende Bohrung 17 ist mit einer Unterdruckkammer 18 verbunden. Diese Unterdruckkammer 18 erstreckt sich über der Oberseite der Drehscheibe 6, vom Überlappungsbereich mit der Verteilerscheibe 1 bis mindestens zum Kontrollpunkt 9b der Drehscheibe 6. Hier wird die Unterseite 2b mittels einer weiteren Kamera 8b an der Übernahmescheibe 6 hängend inspiziert. Das Prüfergebnis beider Kameras 8a und 8b wird dann an Sortiereinrichtungen (nicht dargestellt) weitergeleitet.

Bei der in Fig.6 gezeigten Ausbildung weist der Prüfling 2 keine Seitenflächen 2c auf, da er eiförmig gestaltet ist. Hier benötigt man keinen Stößel 12, um den Prüfling 2 anzuheben. Die Ausnehmung 4 der Verteilerscheibe 1 ist nämlich mit einer Überdruckkammer 19 verbunden. Durch Druckluft wird der Prüfling 2 im Überlappungsbereich der beiden Drehscheiben 1 und 6 angehoben und gelangt in die mit der Ausnehmung 4 fluchtende Ausnehmung 7 auf der Unterseite der Drehscheibe 6 und wird dort mit Hilfe der Unterdruckkammer 18 an der Unterseite der Drehscheibe 6 festgehalten. Die Drehscheibe 6 fungiert somit als Übernahmescheibe 6, wie sie nachstehend stets benannt wird.

Es soll jedoch noch erwähnt werden, daß, sollte der Prüfling 2 Seitenflächen 2c aufweisen, diese auch an der Übernahmescheibe 6 hängend inspiziert werden könnten. Diese Ausbildung ist aber nicht in einer besonderen Figur dargestellt worden.

Nach Beendigung der vollständigen Inspektion im Kontrollpunkt 9b muß der Prüfling 2 entsprechend dem Prüfergebnis entweder gesammelt oder verworfen werden. Zu diesem Zweck werden durch die von den Kameras 8a und 8b ausgesandten Signale Einrichtungen in Betrieb gesetzt, die den für schlecht befundenen Prüfling 2 nach Durchlaufen der Kontrollstelle 9b von der Übernahmescheibe 6 entfernen und entsprechenden Sammelbehältern (nicht dargestellt) zuführen.

In den Fig. 10 bis 16 sind solche Einrichtungen dargestellt. Nach Fig. 10 wird durch die Bohrung 17 eine Ausnehmung 7, die beim Weiterdrehen der übernahmescheibe 6 die Unterdruckkammer 18 nach der Kontrollstelle 9b verlassen hat, Preßluft 19 eingeleitet, wodurch der für schlecht befundene Prüfling aus der Ausnehmung 7 herausfällt

Nach Fig. 11 wird Preßluft auch von unten an die Übernahmescheibe 6 geleitet, um den für schlecht befundenen Prüfling 2 aus der Ausnehmung 7 zu entfernen.

Nach Fig.12 saugt man den für schlecht befundenen Prüfling 2 über die Saugleitung 20 mit entsprechend höherer Saugleistung, als sie in der Unterdruckkammer 18 herrscht, aus der Ausnehmung 7 heraus, solange sich der Prüfling noch innerhalb der Unterdruckkammer 18 befindet.

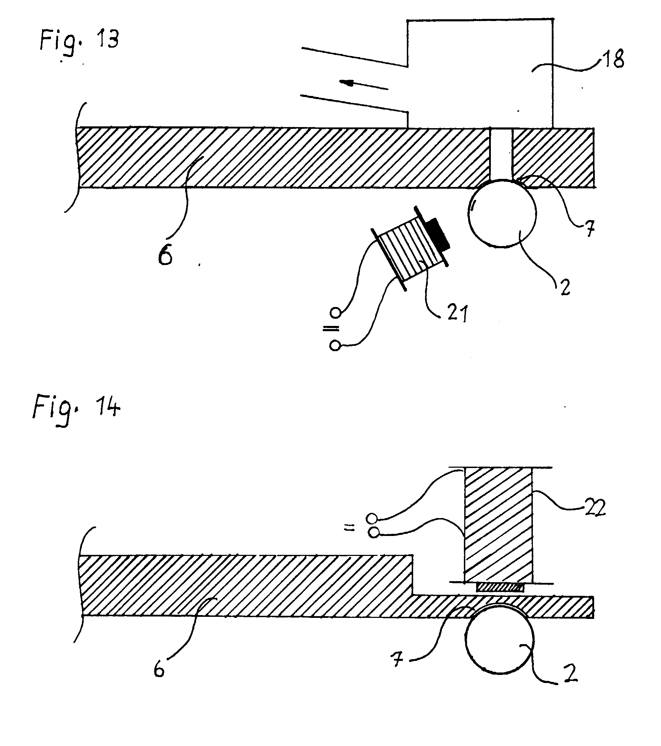

Handelt es sich bei dem Prüfling 2 um ein magnetisierbares Material, so kann man den für schlecht befunden Prüfling auch mit Hilfe eines Elektromagneten 21 aus der Ausnehmung 17 der Übernahmescheibe herauslösen (siehe Fig.13).

Nach Fig. 14 wird der Prüfling 2 während des Prüfvorganges mit Hilfe eines Elektromagneten 22 in der Ausnehmung 7 festgehalten. Nach Beendigung der Kontrolle wird der Elektromagnet 22 ausgeschaltet und der für schlecht befundene Prüfling fällt aus der Ausnehmung 7 in einen entsprechend nicht dargestellten Sammelbehälter.

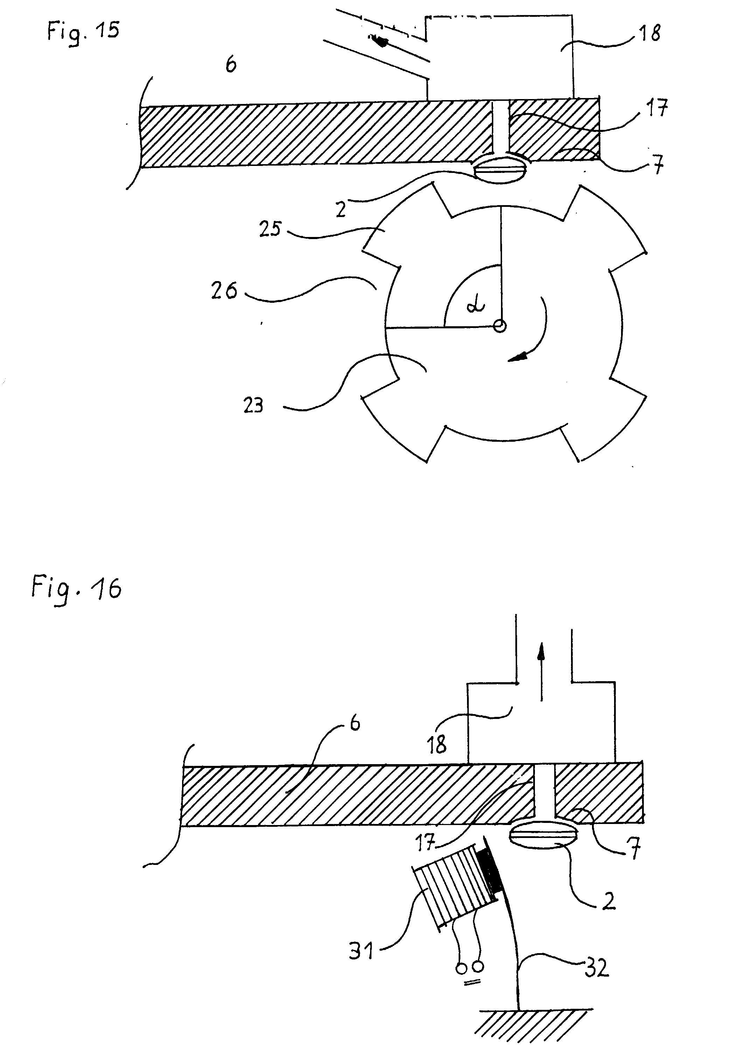

In Fig. 15 ist eine Einrichtung 23 gezeigt, mit deren Hilfe ein für schlecht befundener Prüfling 2 mechanisch aus der Ausnehmung 7 gelöst wird. Es handelt sich hier um ein Zahnrad 22, dessen Drehachse 24 parallel zur Ebene des Drehtellers der Übernahmescheibe 6 verläuft. Durch eine Drehbewegung um einen Zahn 25, das heißt um den Winkel α des Zahnrades 23 um seine Drehachse 24 wird ein für schlecht befundener Prüfling 2 erfaßt und in einen nicht dargestellten Sammelbehälter ausgeworfen.

In Fig. 16 ist eine weitere mechanische Vorrichtung zur Aussortierung der für schlecht befundenen Prüflinge dargestellt. Diese umfaßt einen Elektromagneten 31, der eine Feder 32 in gespanntem Zustand festhält. Soll ein für schlecht befundener Prüfling ausgeworfen werden, gibt der Elektromagnet 31 die von ihm festgehaltene Feder 32 frei, welche dann mit ihrer Eigenfrequenz in die entgegengesetzte Lage schwingt und dabei den für schlecht befundenen Prüfling auswirft. Genau zu diesem Zeitpunkt schaltet der Elektromagnet 31 aber wieder ein, sodaß die Feder 32 in ihre Ausgangslage zurückgeholt wird und am eingeschalteten Elektromagneten 31 hängen bleibt.

Zur Steigerung der Stückzahl bei der Inspektion der Prüflinge ist es möglich, nach Fig. 7 zwei Verteilerscheiben 1a und 1b mit Prüflingen 2 zu beschicken. Die beiden Verteilerscheiben 1a und 1b drehen sich im gleichen Drehsinn und überlappen in Teilbereichen ihres Umfanges Umfangbereiche einer Übernahmescheibe 6, die sich im Gegensinn zu den Verteilerscheiben la und 1b dreht. Jedem Umfangbereich sind hier Prüfvorrichtungen zugeordnet die jedoch im einzelnen nicht in der Zeichnung dagestellt sind.

Die Anordnung der Drehachsen 3a und 3b relativ zur Drehachse 5 sowie die Höhenlagen der drei Drehscheiben sind aus Fig.8 zu erkennen. Wie eingangs bereits erwähnt wurde ist in Fig.9 eine Verteilerscheibe 1 mit zwei Reihen von Ausnehmungen 4 in konzentrischer Anordnung gezeigt. Die zugehörige übernahmescheibe 6 ist ebenfalls mit zwei Reihen von Ausnehmungen 7 versehen, die konzentrisch um die Drehachse 5 angeordnet sind. Durch diese Maßnahme kann erreicht werden, daß bei der Prüfung die Stückzahl der Prüflinge pro Minute erhöht wird.

Im Laufe der Zeit ist auch bei der beschriebenen Vorrichtung zur Prüfung der Oberfläche von Gegenständen eine geringe Verschmutzung nicht zu vermeiden. Diese Verschmutzung wirkt sich im wesentlichen nur auf die Gleitbewebung des Stößels 12 in den Ausnehmungen 4 der Verteilerscheibe 1 aus. Um eine einfache Reinigung des Stößels zu erreichen, kann dieser durch Absaugen oder Abblasen seiner Verunreinigungen gereinigt werden, wenn er sich in einer mit Hilfe der Hebeschiene 16 angehobenen Position befindet.

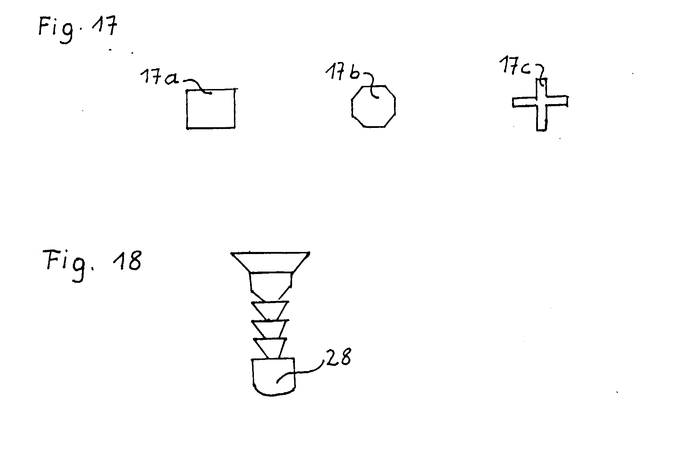

Es kann der Stößel 12 jedoch auch wie in Fig.17 a,b,c, gezeigt ist, eine quadratische (17a ), Vieleck (17b), oder in Kreuzform (17c) ausgebildet sein.

Dadurch wird dann ein Verunreinigen des Führungsschaftes bzw. des Stößels vermieden.

In Fig.18 ist ein Stößelschaft 12 in Sägezahnform dargestellt, welcher in Verbindung mit einer Absaugvorrichtung ebenfalls eine selbstreinigende Wirkung hat.

## Patentansprüche

1. Verfahren zur Überprüfung der Oberfläche einer Mehrzahl kleiner Gegenstände (Prüflinge) von im wesentlichen übereinstimmender Gestalt, bei dem die als Schüttgut zugeführten Prüflinge verteilt und positioniert werden, bevor sie mittels einer in einer horizontalen Ebene drehbaren Scheibe zur Prüfung ihrer Oberseite an einer ersten Prüfvorrichtung vorbeibewegt und anschließend von einer weiteren drehbaren Scheibe übernommen und von dieser zur Prüfung ihrer Unterseite an einer zweiten Prüfvorrichtung vorbeibewegt werden, wobei die Prüflinge, zumindest für die Dauer der jeweiligen Prüfungen, an den Scheiben festgehalten werden, um anschließend entsprechend dem Prüfergebnis sortiert zu werden, **dadurch gekennzeichnet,** daß die Verteilung und Positionierung der Prüflinge in ihre Prüfpositionen durch die genannte drehbare Scheibe (Verteilerscheibe) erfolgt, mit der die Gegenstände der Prüfung ihrer Oberseite zugeführt werden und daß die für die Übernahme der Prüflinge zur Prüfung ihrer Unterseite dienende Scheibe (Übernahmescheibe) in einer in einem geringen Abstand über der Verteilerscheibe verlaufenden horizontalen Ebene, in gegensinniger Richtung zur Verteilerscheibe gedreht wird, daß die Prüflinge von der Verteilerscheibe an die Übernahmescheibe übergeben werden, die die Prüflinge an ihrer bereits geprüften Oberseite haltend, an der zweiten Prüfvorrichtung vorbeibewegt, wobei ein solcher Abstand der vertikalen Drehachsen beider Scheiben gewählt wird, daß die Übertragung der Prüflinge von Scheibe zu Scheibe durch eine Überlappung der Umfangsbereiche beider Scheiben ermöglicht wird.

2. Verfahren nach Anspruch 1, **dadurch gekennzeichnet,** daß die Drehgeschwindigkeiten von Verteilerscheibe und Übernahmescheibe so gewählt werden, daß die Relativgeschwindigkeit zwischen beiden Scheiben im Überlappungsbereich null ist.

3. Verfahren nach Anspruch 1 oder 2, **dadurch gekennzeichnet,** daß die Seitenflächen der Gegenstände vor ihrer Übernahme durch die Übernahmescheibe geprüft werden.

4. Verfahren nach einem der Ansprüche 1 bis 3, **dadurch gekennzeichnet,** daß zur Prüfung der Seitenflächen die Gegenstände über die Oberfläche der Verteilerscheibe angehoben werden.

5. Verfahren nach einem der Ansprüche 1 bis 4, **dadurch gekennzeichnet,** daß zur Prüfung der Seitenflächen die Gegenstände an der Unterseite der Übernahmescheibe gehalten werden.

6. Verfahren nach einem der Ansprüche 1 bis 5, **dadurch gekennzeichnet,** daß der Übergang der Gegenstände von der Verteilerscheibe zur Übernahmescheibe mit Hilfe von Unterdruck und/oder Preßluft und/oder magnetisch und/oder mechanisch erfolgt.

7. Verfahren nach einem der vorhergehenden Ansprüche, **dadurch gekennzeichnet,** daß mehrere Gegenstände gleichzeitig geprüft werden.

8. Vorrichtung zur Überprüfung der Oberfläche einer Mehrzahl kleiner Gegenstände nach einem der Ansprüche 1 bis 7 mit einer ersten, in einer horizontalen Ebene drehbaren Scheibe, die dazu dient, die Prüflinge zur Überprüfung ihrer Oberseite an einer ersten Prüfvorrichtung vorbeizubewegen und mit einer zweiten drehbaren Scheibe, die dazu dient, die Prüflinge von der ersten Scheibe zu übernehmen und an ihrer geprüften Seite zu halten,um ihre dieser gegenüberliegende Oberfläche an einer zweiten Prüfvorrichtung vorbeizubewegen, wobei sich die beiden drehbaren Scheiben unter Wahrung eines spaltförmigen Zwischenraumes zur Übertragung der auf der ersten Scheibe befindlichen Prüflinge an die zweite Scheibe bereichsweise überlappen und ferner mit Vorrichtungen, die dazu dienen, die Prüflinge für die Dauer der jeweiligen Prüfungen an den Scheiben festzuhalten, und/oder die Prüflinge nach erfolgter Prüfung von den Scheiben zu lösen, **dadurch gekennzeichnet,** daß die zweite drehbare Scheibe (6) (Übernahmescheibe) in einer horizontalen Ebene drehbar ist, die in einem geringen Abstand über der Ebene der ersten Scheibe (1, 1a, 1b) (Verteilerscheibe) verläuft und daß der Abstand (a) der vertikalen Drehachsen (3, 5) beider Scheiben durch die für die Übertragung der Prüflinge erforderlichen Überlappung der Umfangsbereiche beider Scheiben bestimmt ist.

9. Vorrichtung nach Anspruch 8, **dadurch gekennzeichnet,** daß mindestens eine weitere Scheibe (1b) (Verteilerscheibe) vorgesehen ist, deren Anordnung und Funktion in Bezug auf die zweite Scheibe (6') (Übernahmescheibe) derjenigen der ersten Scheibe (1, la) entspricht und der Überlappungsbereich der zweiten Scheibe (6) in einem Winkelabstand von der ersten Scheibe liegt.

10. Vorrichtung nach einem der Ansprüche 8 oder 9, **dadurch gekennzeichnet,** daß an den Scheiben längs ihres Umfanges Ausnehmungen (4,7) für die Aufnahme der Prüflinge (2) vorgesehen sind, die in einer oder mehreren konzentrischen Reihen in Abständen voneinander angeordnet sind, wobei sich die Ausnehmungen (7) der Übernahmescheibe (6) auf ihrer der Verteilerscheibe (1) zugewandten Unterseite befinden.

11. Vorrichtung nach einem der Ansprüche 8 bis 10, **dadurch gekennzeichnet,** daß die Rotationsgeschwindigkeiten der Scheiben so aufeinander abgestimmt sind, daß in dem Überlappungsbereich jeweils mindestens eine Ausnehmung einer Scheibe mit einer Ausnehmung der dieser gegenüberliegenden Scheibe fluchtet.

12. Vorrichtung nach einem der Ansprüche 8 bis 11, **dadurch gekennzeichnet,** daß Übernahmeund Verteilerscheibe (n) gegensinnig umlaufen.

13. Vorrichtung nach einem der Ansprüche 8 bis 12, **dadurch gekennzeichnet,** daß die Ausnehmungen der Scheiben als durch die Scheibe hindurchverlaufende Bohrungen ausgebildet sind.

14. Vorrichtung nach einem der Ansprüche 8 bis 13, **dadurch gekennzeichnet,** daß in den Ausnehmungen der Verteilerscheiben ein auf- und abbewegbarer Stössel (12) vorgesehen ist, dessen kopfseitiges Ende als Auflagefläche (12a) für den in der Ausnehmung (4) befindlichen Prüfling (2) dient.

15. Vorrichtung nach einem Ansprüche 8 bis 14, **dadurch gekennzeichnet,** daß der Stössel (12) als Hülse ausgebildet ist, die mit einer Unterdruck(15) und/oder mit einer Überdruckkammer (19) verbindbar ist.

16. Vorrichtung nach einem der Ansprüche 8 bis 15, **dadurch gekennzeichnet,** daß der Schaft des Stössels (12) mit Kanten (27,28) zur Selbstreinigung ausgebildet ist.

17. Vorrichtung nach einem der Ansprüche 8 bis 16, **dadurch gekennzeichnet,** daß zumindest vor und/oder in den Überlappungsbereichen der Scheiben unter der Verteilerscheibe (1) eine Auflaufschiene (16) für den Stösselfuß vorgesehen ist, die dazu dient, den Stössel (12) zusammen mit dem Prüfling (2) zumindest soweit über die Oberfläche der Verteilerscheibe (1) anzuheben, daß er in den zwischen den Scheiben (1,6) befindlichen Spalt gelangt, um gegebenenfalls eine Prüfung seiner Umfangsfläche zu durchlaufen und/oder in den Bereich einer Ausnehmung (7) der Übernahmescheibe (6) zu kommen.

18. Vorrichtung nach einem der Ansprüche 8 bis 17, **dadurch gekennzeichnet,** daß die für die Aufnahme und Übergabe der Prüflinge vorgesehenen Ausnehmungen (4,7) der Scheiben (1,6) mit einer Unterdruckund/oder einer Überdruckkammer (15,19) verbunden sind.

19. Vorrichtung nach einem der Ansprüche 8 bis 18, **dadurch gekennzeichnet,** daß über der oder den Verteilerscheiben (1,1a,1b) in Drehrichtung gesehen, vor Beginn ihres Überlappungsbereiches mit der Übernahmescheibe (6) eine erste Prüfvorrichtung (8a) für die Überprüfung der Oberseite der Prüflinge angeordnet ist.

20. Vorrichtung nach einem der Ansprüche 8 bis 19, **dadurch gekennzeichnet,** daß die Prüfung der Umfangsfläche eines angehobenen Prüflings (2) mit Hilfe von Umlenkprismen (11a,b) und/oder Spiegeln (10a,b) erfolgt, die der ersten Prüfvorrichtung (81) zugeordnet sind.

21. Vorrichtung nach einem der Ansprüche 8 bis 20, **dadurch gekennzeichnet,** daß in Drehrichtung gesehen, nach dem oder den Überlappungsbereichen unter der Übernahmescheibe (6) eine zweite Prüfvorrichtung (8b) zur Prüfung der Unterseite und/oder der Seitenflächen der Prüflinge angeordnet ist.

22. Vorrichtung nach einem der Ansprüche 8 bis 21, **dadurch gekennzeichnet,** daß bei Prüflingen aus magnetisierbarem Material ein Magnet bzw. ein Elektromagnet (22) als Halte- und/oder Hebevorrichtung dient.

23. Vorrichtung nach einem der Ansprüche 8 bis 22, **dadurch gekennzeichnet,** daß für die Sortierung der von der Übernahmescheibe (6) zu entfernenden Prüflinge (2) eine elektronische Steuervorrichtung (nicht dargestellt) vorgesehen ist, der das Prüfergebnis der Prüfvorichtungen einzuspeisen ist.

24. Vorrichtung nach einem der Ansprüche 8 bis 23, **dadurch gekennzeichnet,** daß eine Auswurfvorrichtung vorgesehen ist, die nach Beendigung der Prüfung der Unterseite eines Prüflings den an der Übernahmescheibe noch festgehaltenen, für schlecht befundenen Prüfling von der Übernahmescheibe entfernt.

25. Vorrichtung nach einem der Ansprüche 8 bis 24, **dadurch gekennzeichnet,** daß zur Entfernung des für schlecht befundenen Prüflings von der Übernahmescheibe eine Preßluftvorrichtung vorgesehen.

26. Vorrichtung nach einem der Ansprüche 8 bis 25, **dadurch gekennzeichnet,** daß zur Entfernung eines für schlecht befundenen Prüflings von der Übernahmescheibe ein Elektromagnet (21,22) eingesetzt ist.

27. Vorrichtung nach einem der Ansprüche 8 bis 26, **dadurch gekennzeichnet,** daß der für schlecht befundene Prüfling mechanisch von der Übernahmescheibe entfernt wird.

28. Vorrichtung nach einem der Ansprüche 8 bis 27, **dadurch gekennzeichnet,** daß zur mechanischen Entfernung der für schlecht befundenen Prüflinge von der Übernahmescheibe unter der Übernahmescheibe ein Zahnrad (23) mit einer parallel zur Scheibe verlaufenden Drehachse (24) angeordnet ist, das sich jeweils, wenn ein Prüfling ausgeworfen werden soll, um eine Position weiterdreht und der für schlecht befundene Prüfling in einen Zwischenraum (26) zwischen den einzelnen Zähnen (25) des Zahnrades (23) gelangt.

29. Vorrichtung nach einem der Ansprüche 8 bis 28, **dadurch gekennzeichnet,** daß zur Entfernung eines für schlecht befundenen Prüflings ein Federsystem in Verbindung mit einem Elektromagneten vorgesehen ist.

## Claims

1. Process for inspecting the surface of a plurality of small objects (items for examination) of essentially identical shape, in which the examination objects supplied in the form of a pourable material are distributed and positioned before they are moved by a disc rotating in a horizontal plane past a first inspection device for examination of their upper area, are subsequently received by a further rotatable disc and are moved by this for examination of their lower area past a second inspection device, said examination objects being retained on the discs at least for the duration of the respective inspections in order subsequently to be sorted in accordance with the inspection result, **characterised in that** the distribution and positioning of the examination objects in their inspection positions is performed by the indicated rotatable disc (distributor disc) with which the objects are supplied for inspection of their upper area, and that the disc serving as a receptor of the examination objects for inspection of their lower area (receiving disc) is rotated in a horizontal plane located a small distance above that of the distributor disc, and in the opposite rotational direction to that of said distributor disc, that the examination objects are transferred from the distributor disc to the receiving disc which, holding the examination objects at their already inspected upper face, passes by the second inspection device, with the distance between the vertical axes of rotation of the two discs being selected such that transfer of the examination objects from disc to disc is facilitated by an overlap of the peripheral regions of the two discs.

2. Process according to Claim 1, **characterised in that** the rotational speeds of the distributor disc and receiving disc are selected such that the relative velocity between the two discs in the overlap region is zero.

3. Process according to Claim 1 or 2, **characterised in that** the side faces of the objects are inspected prior to their transfer to the receiving disc.

4. Process according to Claims 1 to 3, **characterised in that,** for inspecting the side faces, the objects are raised above the surface of the distributor disc.

5. Process according to Claims 1 to 4, **characterised in that,** for inspecting the side faces, the objects are held at the lower face of the receiving disc.

6. Process according to Claims 1 to 5, **characterised in that** the transfer of the objects from the distributor disc to the receiving disc is performed with the aid of negative pressure and/or compressed air and/or magnetic means and/or mechanical means.

7. Process according to one of the preceding claims, **characterised in that** several objects are inspected simultaneously.

8. Device for inspecting the surface of a plurality of small objects according to one of Claims 1 to 7, with a first disc which is rotatable in a horizontal plane and which serves to move the examination objects past a first inspection device for inspection of their upper area, and with a second rotatable disc which serves to receive the examination objects from the first disc and to hold them at their inspected face in order to move the opposite surface past a second inspection device, with the two rotatable discs overlapping within a certain region while maintaining a gap-like intermediate space for transfer of the examination objects located on the first disc to the second disc, and further exhibiting devices which serve to retain on the discs the examination objects for the duration of the various inspections, and/or to detach the examination objects from the discs following completion of the inspection, **characterised in that** the second rotatable disc (6) (receiving disc) is rotatable in a horizontal plane which runs at a small distance above the plane of the first disc (1, 1a, 1b) (distributor disc), and that the distance (a) between the vertical axes of rotation (3, 5) of the two discs is determined by the overlap of the peripheral regions of the two discs necessary for transfer of the examination objects.

9. Device according to Claim 8, **characterised in that** at least one further disc (1b) (distributor disc) is provided, the arrangement and function of which in relation to the second disc (6) (receiving disc) corresponds to that of the first disc (1, 1a), and the overlap region of the second disc (6) lies at an angular distance from the first disc.

10. Device according to Claim 8 or 9, **characterised in that** recesses (4, 7) are provided on the discs along their periphery for receiving the examination objects (2), which recesses (4, 7) being arranged in one or several concentric rows at intervals from one another, with the recesses (7) of the receiving disc (6) being located on the underside facing the distributor disc (1).

11. Device according to Claims 8 to 10, **characterised in that** the rotary speeds of the discs are coordinated such that, in the overlap region, at least one recess of one disc is in flush alignment with one recess of the disc facing it.

12. Device according to Claims 8 to 11, **characterised in that** the receiving and distributor discs rotate in opposite directions.

13. Device according to Claims 8 to 12, **characterised in that** the recesses in the discs are designed as holes running through the disc.

14. Device according to Claims 8 to 13, **characterised in that** a plunger (12) which moves up and down is provided in the recesses of the distributor disc(s), the top end of which plunger (12) serves as a support surface (12a) for the examination object (2) located in the recess (4).

15. Device according to Claims 8 to 14, **characterised in that** the plunger (12) is designed as a sleeve which can be connected to a vacuum (15) and/or a pressurised chamber (19).

16. Device according to Claims 8 to 15, **characterised in that** the shaft of the plunger (12) is designed with lands/edges (27, 28) to facilitate self-cleaning.

17. Device according to Claims 8 to 16, **characterised in that,** at least in front of and/or in the overlapping regions of the discs, a ramp element (16) is provided below the distributor disc (1) for the plunger foot, which ramp (16) serves to raise the plunger (12) together with the examination object (2) at least sufficiently above the surface of the distributor disc (1) so that said examination object (2) is located into the gap between the discs (1, 6), so enabling it, where appropriate, to undergo an inspection of its circumferential/peripheral area and/or to move into the area of a recess (7) in the receiving disc (6).

18. Device according to Claims 8 to 17, **characterised in that** the recesses (4, 7) in the discs (1, 6) provided for location and transfer of the examination objects are connected to a vacuum and/or pressurised chamber (15, 19).

19. Device according to Claims 8 to 18, **characterised in that,** arranged above the distributor disc or discs (1, 1a, 1b), before the beginning of its overlap region with the receiving disc (6) as viewed in the direction of rotation, is a first inspection device (8a) for inspection of the upper area of the examination objects.

20. Device according to Claims 8 to 19, **characterised in that** inspection of the peripheral area of a raised examination object (2) is performed with the aid of refractive prisms (11a, b) and/or mirrors (10a, b) which are assigned to the first inspection device (8).

21. Device according to Claims 8 to 20, **characterised in that,** arranged after the overlapping region or regions, as viewed in the direction of rotation, and below the receiving disc (6) is a second inspection device (8b) for inspecting the underside and/or lateral faces of the examination objects.

22. Device according to Claims 8 to 21, **characterised in that,** in the case of examination objects of magnetisable material, a magnetic or an electro-magnet (22) serves as the retaining and/or lifting device.

23. Device according to Claims 8 to 22, **characterised in that** an electronic control device (not illustrated) is provided for sorting the examination objects (2) to be removed from the receiving disc (6), into which electronic control device is fed the test result of the inspection devices.

24. Device according to Claims 8 to 23, **characterised in that** an ejector device is provided which, on completion of the inspection of the lower area of an examination object, removes from the receiving disc any non-conforming examination object still retained on the receiving disc.

25. Device according to Claims 8 to 24, **characterised in that** a compressed air/pneumatic device is provided for removing the non-conforming examination object from the receiving disc.

26. Device according to Claims 8 to 25, **characterised in that** an electro-magnet (21, 22) is used to remove the non-conforming examination object from the receiving disc.

27. Device according to Claims 8 to 26, **characterised in that** the non-conforming examination objects are removed from the receiving disc by mechanical means.

28. Device according to Claims 8 to 27, **characterised in that,** to facilitate the mechanical removal of the non-conforming examination objects from the receiving disc, arranged below the receiving disc is a toothed wheel (23) with a rotational axis (24) running parallel to said disc, which toothed wheel (23) indexes forward by one position whenever a non-conforming examination object is to be ejected, so causing the object to pass into the gap (26) between the individual teeth (25) of the wheel (23).

29. Device according to Claims 8 to 28, **characterised in that** a spring system combined with an electro-magnet is provided for removal of the non-conforming examination objects.

## Revendications

1. Procédé pour le contrôle de la surface de plusieurs petits objets (objets à contrôler) de forme substantiellement concordante, dans lequel les objets à contrôler qui sont amenés en vrac sont répartis et positionnés avant qu'ils ne soient déplacés pour passer au moyen d'un disque rotatif dans un plan horizontal un premier dispositif de contrôle pour le contrôle de leur face supérieure et ensuite repris par un autre disque rotatif qui les déplace pour passer un second dispositif de contrôle pour le contrôle de leur face inférieure, les objets à contrôler étant au moins pour la durée des divers contrôles retenus aux disques pour ensuite être triés conformément au résultat du contrôle, caractérisé en ce que la répartition et le positionnement des objets à contrôler dans leur position de contrôle se font par le disque rotatif cité (disque de répartition) moyennant lequel les objets sont amenés au contrôle de leur face supérieure et que le disque servant à reprendre les objets à contrôler pour le contrôle de leur face inférieure (disque de reprise) est tourné à une faible distance dans un plan s'étendant horizontalement au-dessus du disque de répartition en sens contraire au disque de répartition, de sorte que les objets à contrôler sont remis du disque de répartition au disque de reprise qui, tenant les objets à contrôler par la face supérieure déjà contrôlée, les déplace pour passer le second dispositif de contrôle, une distance telle étant choisie entre les axes de rotation verticaux des deux disque que la transmission des objets à contrôler d'un disque à l'autre peut être réalisée par un chevauchement des zones périphériques des deux disques.

2. Procédé selon la revendication 1, caractérisé en ce que les vitesses de rotation des disque de répartition et disque de reprise sont choisies de manière à ce que la vitesse relative entre les deux disques est égale à zéro dans la zone de chevauchement.

3. Procédé selon les revendications 1 ou 2, caractérisé en ce que les faces latérales des objets sont contrôlées avant leur reprise par le disque de reprise.

4. Procédé selon l'une quelconque des revendications 1 à 3, caractérisé en ce que pour le contrôle des faces latérales, les objets sont relevés au-dessus de la surface du disque de répartition.

5. Procédé selon l'une quelconque des revendications 1 à 4, caractérisé en ce que pour le contrôle des faces latérales, les objets sont tenus par la face inférieure du disque de reprise.

6. Procédé selon l'une quelconque des revendications 1 à 5, caractérisé en ce que la transition des objets du disque de répartition au disque de reprise est réalisée à l'aide d'une dépression et/ou de l'air comprimé et/ou magnétiquement et/ou mécaniquement.

7. Procédé selon l'une quelconque des revendications précédentes, caractérisé en ce que plusieurs objets sont simultanément contrôlés.

8. Dispositif pour le contrôle de la surface de plusieurs petits objets selon l'une quelconque des revendications 1 à 7, comportant un premier disque dans un plan horizontal qui sert à déplacer les objets à contrôler pour passer un premier dispositif de contrôle pour le contrôle de leur face supérieure et un second disque rotatif qui sert à reprendre les objets à contrôler du premier disque et à les tenir par leur côté contrôlé afin de les déplacer pour que la face opposée au côté contrôlé passe un second dispositif de contrôle, les deux disques rotatifs chevauchant dans certaines zones en maintenant entre eux un interstice de la forme d'une fente pour la transmission des objets à contrôler se trouvant sur le premier disque à un second disque, et comportant par ailleurs des dispositifs qui servent à tenir les objets contrôlés aux disques pour la durée des divers contrôles, et/ou à détacher les objets à contrôler après l'achèvement du contrôle, caractérisé en ce que le second disque rotatif (6) (disque de reprise) est rotatif dans un plan horizontal qui s'étend à faible distance au-dessus du plan du premier disque (1, 1a, 1b) (disque de répartition) et que la distance (a) des axes rotatifs verticaux (3, 5) des deux disques est déterminée par le chevauchement des zones périphériques des deux disques nécessaire à la transmission des objets à contrôler.

9. Dispositif selon la revendication 8, caractérisé en ce qu'au moins un disque supplémentaire (1b) (disque de répartition) est prévu dont la disposition et la fonction par rapport au second disque (6) (disque de reprise) correspondent à celles du premier disque (1, la) et que la zone de chevauchement du second disque (6) se trouve à une distance angulaire par rapport au premier disque.

10. Dispositif selon l'une quelconque des revendications 8 ou 9, caractérisé en ce que des échancrures (4, 7) sont prévues dans les disques le long de leur circonférence pour la réception des objets à contrôler (2), échancrures qui sont disposées en une ou plusieurs rangées concentriques à distances réciproques, les échancrures (7) du disque de reprise (6) se trouvant sur sa face inférieure dirigée vers le disque de répartition (1).

11. Dispositif selon l'une quelconque des revendications 8 à 10, caractérisé en ce que les vitesses de rotation des disques sont réciproquement adaptées de manière à ce que dans la zone de chevauchement au moins une échancrure d'un disque est alignée sur une échancrure du disque lui faisant face.

12. Dispositif selon l'une quelconque des revendications 8 à 11, caractérisé en ce que le disque de reprise et le disque de répartition (n) tournent en sens contraire.

13. Dispositif selon l'une quelconque des revendications 8 à 12, caractérisé en ce que les échancrures des disques sont formées comme perçages traversant le disque.

14. Dispositif selon l'une quelconque des revendications 8 à 13, caractérisé en ce que dans les échancrures des disques de répartition un poussoir (12) pouvant être déplacé vers le haut et vers le bas est prévu, dont l'extrémité côté tête sert de surface d'appui (12a) pour l'objet à contrôler (2) se trouvant dans l'échancrure (4).

15. Dispositif selon l'une quelconque des revendications 8 à 14, caractérisé en ce que le poussoir (12) est formé comme douille qui peut être raccordé à une chambre de dépression (15) et/ou une chambre de surpression (19).

16. Dispositif selon l'une quelconque des revendications 8 à 15, caractérisé en ce que la tige du poussoir (12) est pourvue d'arêtes (27, 28) pour l'autonettoyage.

17. Dispositif selon l'une quelconque des revendications 8 à 16, caractérisé en ce qu'au moins en amont et/ou dans les zones de chevauchement des disques un rail de butée (16) pour le pied du poussoir est prévu sous le disque de répartition (1), qui sert à relever le poussoir (12) ensemble avec l'objet à contrôler (2) au moins à telle distance au-dessus de la surface du disque de répartition (1) qu'il pénètre dans la fente se trouvant entre les disques (1, 6) pour, les cas échéant, subir un contrôle de sa surface circonférentielle et/ou arriver dans la zone d'une échancrure (7) du disque de reprise (6).

18. Dispositif selon l'une quelconque des revendications 8 à 17, caractérisé en ce que les échancrures (4, 7) des disques (1, 6) prévues pour la réception et la transmission des objets à contrôler sont raccordées à une chambre de dépression et/ou une chambre de surpression (15, 19).

19. Dispositif selon l'une quelconque des revendications 8 à 18, caractérisé en ce qu'au-dessus du ou des disque(s) de répartition (1, 1a, 1b) vus en direction de la rotation, en amont de la zone de chevauchement avec le disque de reprise (6) un premier dispositif de contrôle (8a) pour le contrôle de la face supérieure des objets à contrôler est prévu.

20. Dispositif selon l'une quelconque des revendications 8 à 19, caractérisé en ce que le contrôle de la surface circonférentielle d'un objet à contrôler (2) relevée se fait à l'aide de prismes déviateurs (11a, b) et/ou de miroirs (10a, b) qui sont associés au premier dispositif de contrôle (8a).

21. Dispositif selon l'une quelconque des revendications 8 à 20, caractérisé en ce que, vu en direction de la rotation, un second dispositif de contrôle (8b) pour le contrôle de la face inférieure et/ou des faces latérales des objets à contrôler est prévu en aval de la ou des zone(s) de chevauchement au-dessous du disque de reprise (6).

22. Dispositif selon l'une quelconque des revendications 8 à 21, caractérisé en ce que pour des objets à contrôler en matériau magnétisable, un aimant ou un électro-aimant (22) en tant que dispositif de maintien et/ou d'élévation est prévu.

23. Dispositif selon l'une quelconque des revendications 8 à 22, caractérisé en ce que pour le triage des objets à contrôler (2), à éliminer du disque de reprise (6), un dispositif de commande électronique (non représenté) est prévu dans lequel le résultat de contrôle des dispositifs de contrôle doit être entré.

24. Dispositif selon l'une quelconque des revendications 8 à 23, caractérisé en ce qu'un dispositif d'éjection est prévu qui, à l'achèvement du contrôle de la face inférieure d'un objet à contrôler, élimine l'objet à contrôler jugé défectueux qui est encore retenu par le disque de reprise.

25. Dispositif selon l'une quelconque des revendications 8 à 24, caractérisé en ce que pour l'élimination de l'objet à contrôler jugé défectueux du disque de reprise, un dispositif à air comprimé est prévu.

26. Dispositif selon l'une quelconque des revendications 8 à 25, caractérisé en ce que pour l'élimination d'un objet à contrôler jugé défectueux du disque de reprise, un électro-aimant (21, 22) est utilisé.

27. Dispositif selon l'une quelconque des revendications 8 à 26, caractérisé en ce que l'objet à contrôler jugé défectueux est éliminé mécaniquement du disque de reprise.

28. Dispositif selon l'une quelconque des revendications 8 à 27, caractérisé en ce que pour l'élimination mécanique des objets à contrôler jugés défectueux du disque de reprise, une roue dentée (23) est prévue sous le disque de reprise avec un axe de rotation (24) parallèle au disque, qui tourne d'un cran lorsqu'un objet à contrôler doit être éjecté et que l'objet à contrôler jugé défectueux arrive dans un interstice (26) entre les diverses dents (25) de la roue dentée (23).

29. Dispositif selon l'une quelconque des revendications 8 à 28, caractérisé en ce que pour l'élimination d'un objet à contrôler jugé défectueux, un système à ressort est prévu en combinaison avec un électro-aimant.
